# EUROPÄISCHE PATENTSCHRIFT

(11) **EP 1 236 933 B1**
(45) Veröffentlichungstag und Bekanntmachung des Hinweises auf die Patenterteilung: **26.07.2006**
(21) Anmeldenummer: 02004157.0
(22) Anmeldetag: 26.02.2002
(51) Int. Cl.: F16H 61/46

(54) **Antriebssystem eines Arbeitsfahrzeugs**
Drive system for working vehicle
Système d'entraînement pour véhicule de travail

(30) Priorität: 01.03.2001 DE 10109775
(43) Veröffentlichungstag der Anmeldung: 04.09.2002
(73) Patentinhaber: DEERE & COMPANY, Moline, Illinois 61265-8098 (US)
(72) Erfinder: Bohrer, Stefan, 66606 St. Wendel (DE)
(74) Vertreter: Holst, Sönke

(56) Entgegenhaltungen:
- EP-A- 0 774 383
- DE-A- 1 625 108
- DE-A- 3 725 044
- US-A- 4 621 495
- US-A- 4 939 954
- US-A- 5 524 436
- US-A- 5 823 072

## Beschreibung

Die Erfindung betrifft ein Antriebssystem eines Arbeitsfahrzeugs, mit einem Motor, der in Antriebsverbindung mit einer Hydrostatpumpe steht, welche hydraulikflüssigkeitsleitend mit einem Hydraulikmotor verbunden ist, der über ein Wechselgetriebe, das unterschiedliche, wählbare Übersetzungsstufen aufweist, mit im Bodeneingriff befindlichen Antriebsmitteln in Antriebsverbindung steht, wobei eine mit der Hydrostatpumpe und/oder dem Hydraulikmotor zusammenwirkende Geschwindigkeitseinstelleinrichtung zum Einstellen der Drehzahl des Hydraulikmotors vorhanden ist, die über einen Verstellbereich bewegbar ist, der zur Definition einer maximalen Geschwindigkeit eine obere Grenze aufweist, die von der Übersetzungsstufe des Wechselgetriebes abhängt.

Im Stand der Technik ist es bekannt, bei Arbeitsmaschinen, insbesondere landwirtschaftlichen Erntefahrzeugen, eine Begrenzung der maximalen Fahrgeschwindigkeit an der Hydrostatpumpe vorzunehmen. Dazu wird der maximale Schwenkwinkel des Verstellhebels der Hydrostatpumpe mechanisch über einen Anschlag begrenzt. Entsprechend der gesetzlichen Vorgabe des jeweiligen Einsatzlandes für die Arbeitsmaschine wird diese Begrenzung werksseitig eingestellt. So ist z. B. für Deutschland eine Fahrgeschwindigkeit für Erntemaschinen von maximal 20 km/h erlaubt, während in anderen europäischen Ländern die Geschwindigkeit auf 25 km/h begrenzt ist. Die Einstellung der Maximalgeschwindigkeit erfolgt in der höchsten Gangstufe, welche in der Regel für den Straßenbetrieb ausgelegt ist.

Dabei ist als nachteilig anzusehen, dass die mechanische Begrenzung der Maximalgeschwindigkeit an der Hydrostatpumpe nicht nur die Geschwindigkeit bei der Straßenfahrt begrenzt, sondern auch bei allen anderen Gangabstufungen, die für die Feldarbeit vorgesehen sind. So ist eine Erntemaschine für den Einsatz in Deutschland bei Straßenfahrt auf eine Geschwindigkeit von 20 km/h eingeschränkt. Infolge der Begrenzung des Schwenkwinkels des Verstellhebels wird aber auch in grundsätzlich unnötiger Weise die Maximalgeschwindigkeit in allen Gängen, die während der Feldarbeit benutzt werden, limitiert.

In der gattungsbildende DE 1 625 108 A wird vorgeschlagen, bei einem hydrostatisch über ein Wechselgetriebe angetriebenen Fahrzeuge den Bewegungsbereich des Fahrhebels mechanisch zu begrenzen, wenn eine Übersetzungsstufe eingelegt ist, bei der eine vorgegebene Maximalgeschwindigkeit überschritten werden kann. Hier handelt es sich um eine rein mechanische Lösung, die leicht manipuliert werden kann.

In der EP 0 774 383 A wird ein landwirtschaftlicher Mähdrescher beschrieben, dessen Vorderräder über einen Hydrostaten und ein Getriebe angetrieben werden. Eine elektronische Steuerung ist mit einem Sensor zur Erfassung der Position des Fahrhebels verbunden und steuert einen Aktor zur Verstellung der Taumelscheibe der Pumpe an, welche den Hydrostaten antreibt. Ein Geschwindigkeitssensor erfasst die Drehzahl des Getriebes. Wenn diese einen maximal zulässigen Wert erreicht, werden zu höheren Geschwindigkeiten führende Bewegungen des Fahrhebels durch die Steuerung ignoriert. Darin wird ein Geschwindigkeitssensor benötigt.

Die US 5 524 436 A beschreibt ein hydrostatisch-mechanisches Getriebe zum Antrieb eines Fahrzeugs. Der Verbrennungsmotor treibt ein Schaltgetriebe an, an dessen Ausgang sich ein Planetengetriebe befindet, dessen weiterer Eingang durch eine Pumpen-Hydrostat-Kombination angetrieben wird und dessen Ausgang die Räder antreibt. Einer elektronischen Steuerung wird eine Information über die Position eines Gaspedals zugeführt, anhand der sie unter Berücksichtigung des jeweiligen Übersetzungsverhältnisses des Schaltgetriebes die Position der Taumelscheibe der Pumpe auf einen Sollwert einstellt. Das Übersetzungsverhältnis der Pumpen-Hydrostat-Kombination wird derart begrenzt, dass eine maximal zulässige Drehzahl des Hydrostaten nicht überschritten wird. Hier wird demnach nicht die Maximalgeschwindigkeit des Fahrzeugs, sondern die des Hydrostaten begrenzt. Weiterhin dient die Erfassung des Übersetzungsverhältnisses des Schaltgetriebes nicht zur Unterscheidung, ob eine Abfrage der Position des Gaspedals bzw. Fahrhebels überhaupt nötig ist oder nicht.

Die der Erfindung zugrunde liegende Aufgabe wird darin gesehen, ein Antriebssystem oben genannter Art dahingehend zu verbessern, dass die Vortriebsgeschwindigkeit in den unteren Übersetzungsstufen des Wechselgetriebes nicht unnötig eingeschränkt ist.

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Die Erfindung schlägt vor, den Bewegungsbereich der mit der Hydrostatpumpe und/oder dem Hydromotor zusammenwirkenden Geschwindigkeitseinstelleinrichtung in Abhängigkeit von der jeweils ausgewählten Übersetzungsstufe des Wechselgetriebes auszuwählen. Vorzugsweise in den unteren Übersetzungsstufen des Wechselbetriebes steht der komplette Bewegungsbereich zur Verfügung, und somit auch der volle Drehzahlbereich des Hydraulikmotors und der gesamte Geschwindigkeitsbereich. Ist aber die oberste Übersetzungsstufe (oder eine der oberen Übersetzungsstufen) ausgewählt, in der bei einer entsprechenden Stellung der Geschwindigkeitseinstelleinrichtung die maximal zulässige Geschwindigkeit überschritten werden kann, ist der Bewegungsbereich der Geschwindigkeitseinstelleinrichtung derart definiert oder eingeschränkt, dass die maximal zulässige Geschwindigkeit nicht überschritten werden kann. Die Drehzahl des Hydraulikmotors ist dann auf einen festgelegten Wert begrenzt, der niedriger ist als der bei einer anderen Übersetzungsstufe maximal einstellbare Wert.

Die Betätigung der Geschwindigkeitseinstelleinrichtung erfolgt durch einen Antrieb, der von einer elektronischen Steuerung gesteuert wird und sie nur innerhalb des definierten Verstellbereichs bewegt. Die Steuereinrichtung arbeitet ohne Rückkopplung. Das jeweils ausgewählte Übersetzungsverhältnis des Wechselgetriebes wird mit einem Sensor erfasst. Ist es derart groß, dass bei einer entsprechenden Stellung der Geschwindigkeitseinstelleinrichtung die maximal zulässige Geschwindigkeit überschritten werden kann, wird selbsttätig der Bewegungsbereich der Geschwindigkeitseinstelleinrichtung auf einen zulässigen Bereich eingeschränkt. Das erfolgt auf elektromechanische Art. Anderenfalls steht der volle Bereich der Geschwindigkeitseinstelleinrichtung zur Verfügung. Der Sensor ist mit einem Schalter verknüpft, der dann anspricht, wenn das höchste Übersetzungsverhältnis ausgewählt ist.

Auf diese Weise erreicht man, dass in den unteren Übersetzungsstufen der volle Drehzahlbereich des Hydraulikmotors zur Verfügung steht, wobei aber bei der höchsten Übersetzungsstufe eine Einhaltung der maximal zulässigen Geschwindigkeit gewährleistet ist. Ein Überschreiten dieser Geschwindigkeit in den unteren Übersetzungsstufen ist wegen der Übersetzungsverhältnisse nicht möglich.

In den Zeichnungen ist ein nachfolgend näher beschriebenes Ausführungsbeispiel der Erfindung dargestellt. Es zeigt:
- Fig. 1: eine schematische Draufsicht auf ein Arbeitsfahrzeug mit einem erfindungsgemäßen Antriebssystem mit einer elektronisch gesteuerten Geschwindigkeitseinstelleinrichtung, und
- Fig. 2: ein Flussdiagram, nach dem ein Mikroprozessor der elektronischen Steuerung der Figur 1 arbeitet.

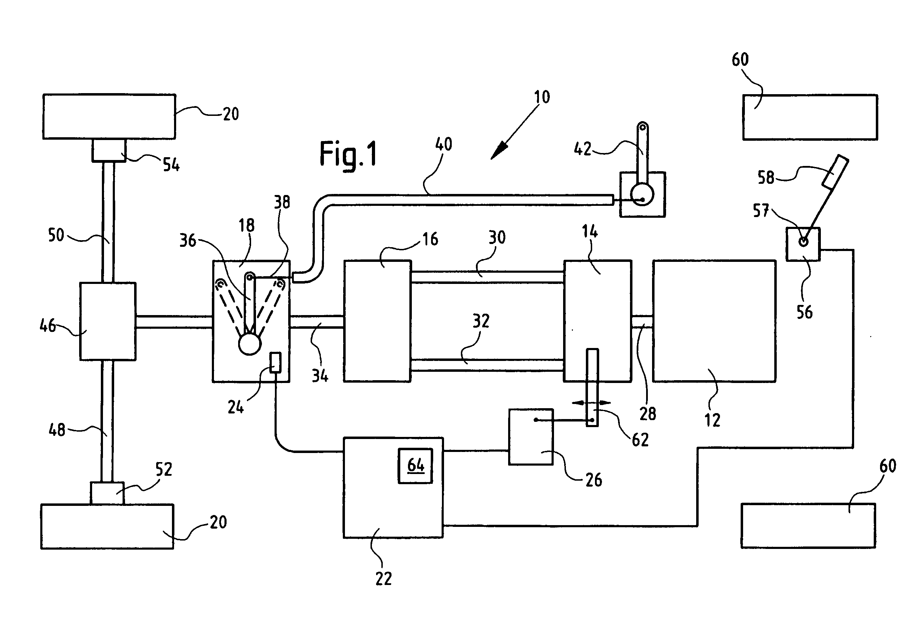

Das in Figur 1 dargestellte Arbeitsfahrzeug 10 weist einen Motor 12 auf, bei dem es sich um einen Verbrennungsmotor handeln kann, oder auch um einen Elektromotor, der durch eine Brennstoffzelle mit elektrischer Energie versorgt wird. Der Motor 12 kann andere Einrichtungen des Arbeitsfahrzeugs 10 mechanisch antreiben, zum Beispiel Gutbearbeitungseinrichtungen eines landwirtschaftlichen Erntefahrzeugs. Ein in der Zeichnung nicht dargestellter Rahmen trägt die einzelnen Elemente des Arbeitsfahrzeugs 10.

Der Motor 12 treibt über eine erste Welle 28 eine Hydrostatpumpe 14 mechanisch an. Die Hydrostatpumpe 14 ist über eine erste Hydraulikflüssigkeitsleitung 30 und eine zweite Hydraulikflüssigkeitsleitung 32 mit einem Hydraulikmotor 16 verbunden. Eine von der Hydrostatpumpe 14 umgewälzte, in den Hydraulikflüssigkeitsleitungen 30, 32 zirkulierende Hydraulikflüssigkeit treibt den Hydraulikmotor 16 an, der eine zweite Welle 34 in Rotation versetzt. Die Hydrostatpumpe 14 und der Hydraulikmotor 16 sind an sich bekannt und bedürfen daher keiner weiteren Beschreibung.

Die zweite Welle 34 treibt mechanisch ein Wechselgetriebe 18 an, bei dem mittels eines Verstellhebels 36 drei unterschiedliche Übersetzungsstufen auswählbar sind. Die Übersetzungsstufe wird durch Verschwenken des Verstellhebels 36 über einen Bowdenzug 38, der in einer Hülle 40 verlegt ist, mittels eines Gangwahlhebels 42 erzielt. Der Gangwahlhebel 42 ist in einer aus Übersichtlichkeitsgründen nicht eingezeichneten Fahrerkabine angeordnet. Durch Verschwenken des Gangwahlhebels 42 wird über den Bowdenzug 38 zur Auswahl der Übersetzungsstufe der Verstellhebel 36 verschenkt. Bei dem hier dargestellten Wechselgetriebe 18 sind drei Übersetzungsstufen auswählbar, wie anhand der drei angedeuteten Stellungen des Verstellhebels 36 erkennbar ist. Das Wechselgetriebe 18 treibt eine dritte Welle 44 an, die über ein Differenzialgetriebe 46 eine vierte Welle 48 und eine fünfte Welle 50 antreibt. Die vierte Welle 48 ist über ein Achsvorgelege 52 mit einem im Bodeneingriff befindlichen Antriebsmittel in Form eines Rads 20 verbunden, und die fünfte Welle über ein zugehöriges Achsvorgelege 54 mit einem gegenüberliegenden Antriebsmittel in Form eines Rads 20. Anstelle der Räder 20 können auch Gleisketten verwendet werden. Das Arbeitsfahrzeug 10 stützt sich mittels zweier weiterer, nicht angetriebener Räder 60 auf dem Boden ab. Es wäre denkbar, auch die Räder 60 anzutreiben. Mindestens eines der Räderpaare 20, 60 ist lenkbar.

Eine elektronische Steuerung 22 ist mit einem Fahrhebelsensor 56 verbunden, der mit einem in der Fahrerkabine um eine horizontale, quer zur Vorwärtsbewegungsrichtung verlaufende Achse 57 verschwenkbar angeordneten Fahrhebel 58 zusammenwirkt. Der Fahrhebelsensor 56 erfasst den jeweiligen Winkel des zur Geschwindigkeitseinstellung dienenden Fahrhebels 58 und beaufschlagt die Steuerung 22 mit einem elektrischen Signal, das eine Information über die jeweilige Stellung des Fahrhebels 58 enthält. Die Steuerung 22 kann auch mit einem in der Zeichnung nicht dargestellten Gaspedal verbunden sein, das bei einer Straßenfahrt zur Geschwindigkeitseingabe dient.

Die Steuerung 22 ist außerdem mit einem am Wechselgetriebe 18 angeordneten Verstellhebelsensor 24 verbunden, der erfasst, ob der Verstellhebel 36 sich in der Stellung befindet, die der höchsten Übersetzungsstufe des Wechselgetriebes 18 entspricht. Der Verstellhebelsensor 24 beaufschlagt die Steuerung 22 mit einem elektrischen Signal, das eine Information darüber enthält, ob mit dem Gangwahlhebel 42 die höchste Übersetzungsstufe des Wechselgetriebes 18 ausgewählt wurde oder nicht.

Die Steuerung 22 ist elektrisch mit einer Geschwindigkeitseinstelleinrichtung 26 in Form eines mit einem Verstellmotor ausgestatteten Aktors verbunden, die einen Taumelscheibenverstellhebel 62 mechanisch bewegt. Der Taumelscheibenverstellhebel 62 bewegt die Taumelscheibe der Hydrostatpumpe 14, welche die Menge der pro Zeiteinheit von der Hydrostatpumpe 14 umgewälzten Hydraulikflüssigkeit beeinflusst.

Anzumerken ist, dass entweder das Wechselgetriebe 18 einen Rückwärtsgang aufweist, oder der Taumelscheibenverstellhebel 62 zwischen einem Vorwärtsfahrbereich und einen Rückwärtsfahrbereich verstellbar ist.

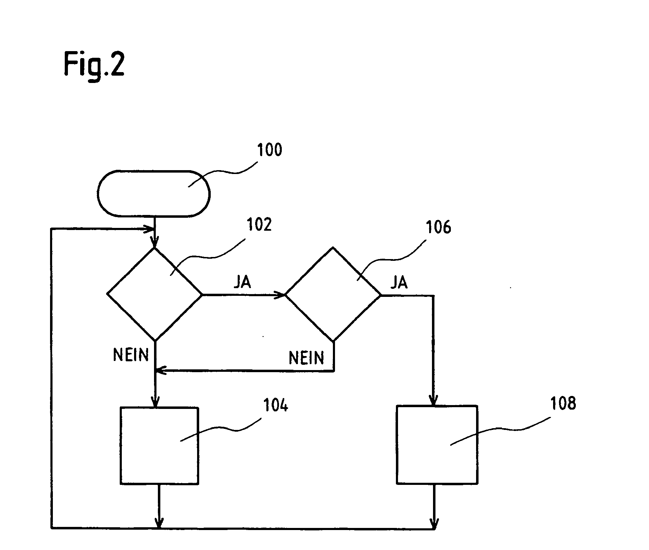

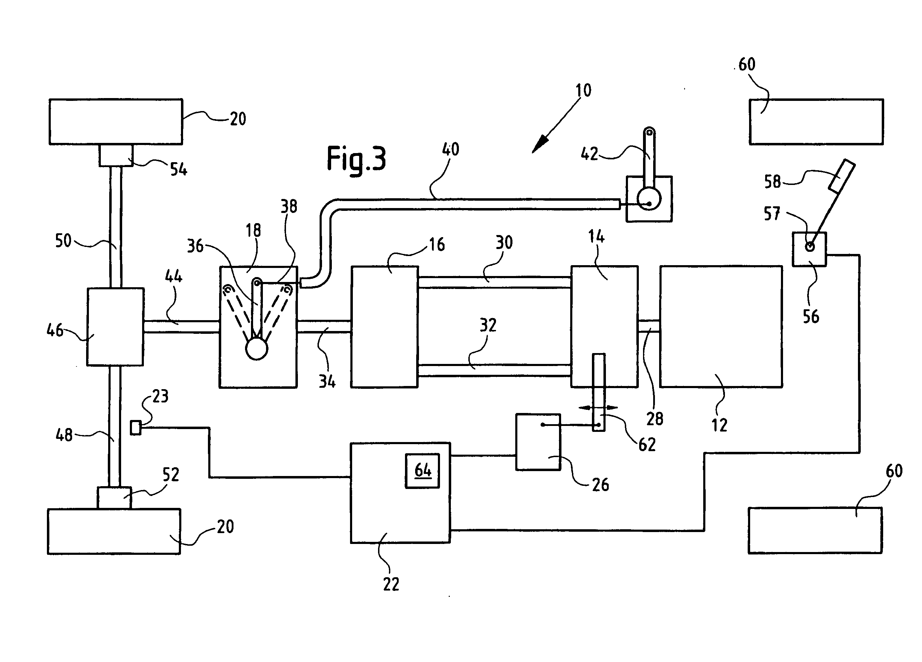

Die Arbeitsweise eines Mikroprozessors 64 der Steuerung 22 ist in Figur 2 dargestellt. Nach dem Start in Schritt 100, also beispielsweise nach dem Anlassen des Motors 12 des Arbeitsfahrzeugs 10, folgt Schritt 102, in dem das Signal des Verstellhebelsensors 24 dahingehend untersucht wird, ob es eine Information enthält, die besagt, dass der Verstellhebel 36 sich in der Stellung befindet, die dem höchsten Übersetzungsverhältnis des Wechselgetriebes 18 entspricht, d. h. im dritten Gang. Ist das nicht der Fall, folgt Schritt 104, in dem der Mikroprozessor 64 veranlasst, dass die Geschwindigkeitseinstelleinrichtung 26 entsprechend der Stellung des Fahrhebels 58 eingestellt wird. Somit wird durch die Geschwindigkeitseinstelleinrichtung 26 die Taumelscheibe der Hydrostatpumpe 14 in die Stellung verbracht, die der vom Fahrer gewünschten Vortriebsgeschwindigkeit der Räder 20 entspricht. Dadurch dreht sich der Hydraulikmotor 16 mit einer der gewünschten Vortriebsgeschwindigkeit entsprechenden Drehzahl. Auf Schritt 104 folgt wieder Schritt 102. Ergibt sich in Schritt 102, dass der dritte Gang eingelegt ist, folgt Schritt 106, in dem eine Abfrage erfolgt, ob sich der Fahrhebel 58 in einer Stellung befindet, die einer Vortriebsgeschwindigkeit entspricht, die größer als die maximal (gesetzlich oder technisch) zulässige Geschwindigkeit des Arbeitsfahrzeugs 10 ist. Im Schritt 106 wird auch die mit dem Verstellhebelsensor 24 erfasste jeweils ausgewählte Übersetzungsstufe des Wechselgetriebes 18 berücksichtigt. Die maximal zulässige Geschwindigkeit kann von Land zu Land variieren und bei der Fertigung der Arbeitsmaschine 10 oder vom Servicepersonal eingegeben oder durch ein EPROM, einen Binärschalter, ein Potentiometer o. ä. definiert werden. Ist die gewählte Geschwindigkeit größer als die maximale Geschwindigkeit, folgt Schritt 108, in der die Geschwindigkeitseinstelleinrichtung 26 in eine Stellung verbracht wird, die der maximal zulässigen Geschwindigkeit entspricht. Dabei dreht sich der Hydraulikmotor 16 mit einer der maximal zulässigen Vortriebsgeschwindigkeit entsprechenden Drehzahl. Auf Schritt 108 folgt wieder Schritt 102. Falls die Abfrage in Schritt 106 ergibt, dass die gewählte Geschwindigkeit nicht größer als die maximal zulässige Geschwindigkeit ist, folgt Schritt 104. Die Abfrage in Schritt 106 erübrigt sich, falls nicht der dritte Gang eingelegt ist, da das Arbeitsfahrzeug die maximal zulässige Geschwindigkeit in den anderen Stellungen des Verstellhebels 36 aufgrund der Übersetzungsverhältnisse des Wechselgetriebes 18 nicht erreichen kann. Man könnte den Schritt 102 auch entfallen und stets Schritt 106 auf Schritt 100 (und 104 und 108) folgen lassen, da die jeweils ausgewählte Übersetzungsstufe des Wechselgetriebes 18 auch im Schritt 106 berücksichtigt wird.

Somit ist die in den unteren Übersetzungsstufen erzielbare Geschwindigkeit von der länderspezifisch definierten maximal zulässigen Vortriebsgeschwindigkeit unabhängig. Die Taumelscheibe der Hydrostatpumpe 14 kann in den unteren Übersetzungsstufen auf den maximalen Schwenkwinkel verbracht werden. Lediglich bei der höchsten Übersetzungsstufe wird der maximale Schwenkwinkel entsprechend der Länderspezifikation begrenzt.

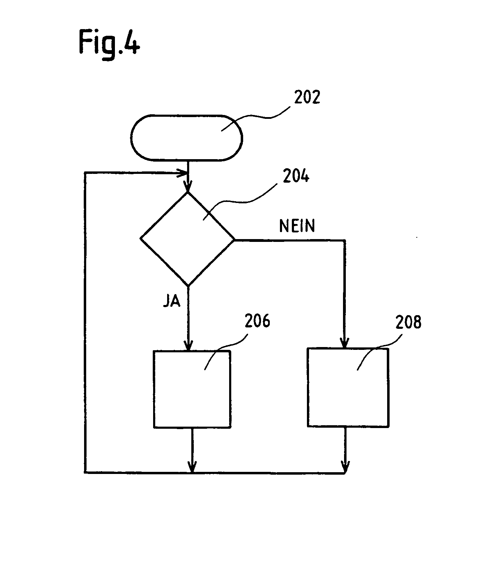

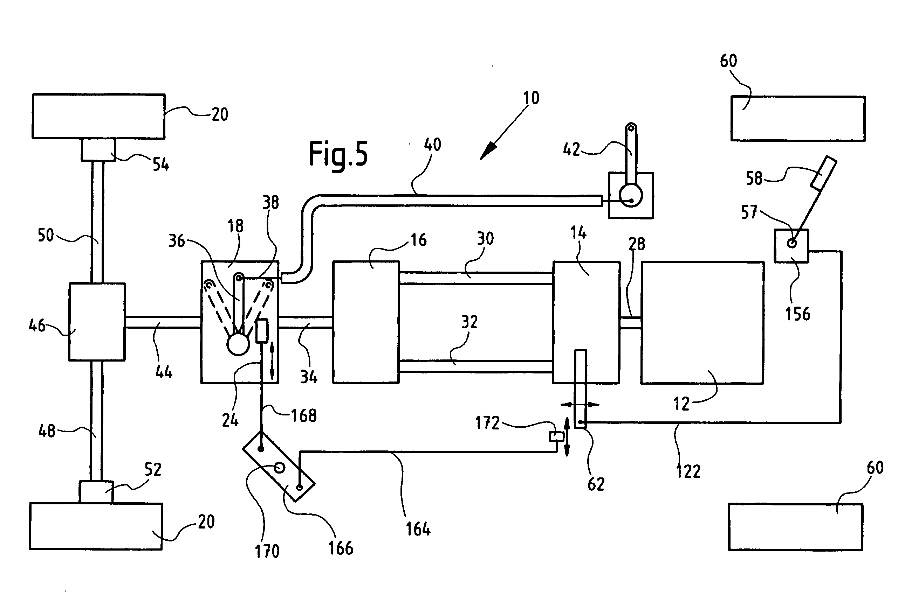

### Auflistung der Schritte der Figuren 2 und 4

- 100: Start
- 102: Steht Verstellhebel 36 im 3. Gang?
- 104: Stelle Geschwindigkeitseinstelleinrichtung 26 entsprechend der Stellung des Fahrhebels 58 ein.
- 106: Ist Fahrhebel 58 in einer Stellung, die einer Vortriebsgeschwindigkeit entspricht, die größer als die maximal zulässige Geschwindigkeit ist?
- 108: Verbringe Geschwindigkeitseinstelleinrichtung 26 in die der maximalen Geschwindigkeit entsprechende Stellung.

## Patentansprüche

1. Antriebssystem eines Arbeitsfahrzeugs (10), mit einem Motor (12), der in Antriebsverbindung mit einer Hydrostatpumpe (14) steht, welche hydraulikflüssigkeitsleitend mit einem Hydraulikmotor (16) verbunden ist, der über ein Wechselgetriebe (18), das unterschiedliche, wählbare Übersetzungsstufen aufweist, mit im Bodeneingriff befindlichen Antriebsmitteln in Antriebsverbindung steht, wobei eine mit der Hydrostatpumpe (14) und/oder dem Hydraulikmotor (16) zusammenwirkende Geschwindigkeitseinstelleinrichtung (26, 122) zum Einstellen der Drehzahl des Hydraulikmotors (16) vorhanden ist, die über einen Verstellbereich bewegbar ist, der zur Definition einer maximalen Geschwindigkeit eine obere Grenze aufweist, die von der Übersetzungsstufe des Wechselgetriebes (18) abhängt, **dadurch gekennzeichnet, dass** die Geschwindigkeitseinstelleinrichtung (26) mit einem von einer elektronischen Steuerung (22) gesteuerten Antrieb versehen ist, dass die Steuerung (22) mit einem die jeweils ausgewählte Übersetzungsstufe des Wechselgetriebes (18) erfassenden Sensor (24) zusammenwirkt, wobei die elektronische Steuerung (22) mit einem Fahrhebelsensor (56) verbunden ist, der mit einem in der Fahrerkabine um eine horizontale, quer zur Vorwärtsbewegungsrichtung verlaufende Achse (57) verschwenkbar angeordneten, zur Geschwindigkeitseinstellung dienenden Fahrhebel (58) zusammenwirkt, wobei der Fahrhebelsensor (56) den jeweiligen Winkel des Fahrhebels (58) erfasst und die Steuerung (22) mit einem elektrischen Signal beaufschlagt, das eine Information über die jeweilige Stellung des Fahrhebels (58) enthält, und die Steuerung (22) betreibbar ist, bei einem Signal des Sensors (24), das auf eine eingelegte Übersetzungsstufe des Wechselgetriebes (18) hinweist, bei der die Geschwindigkeit des Arbeitsfahrzeugs (10) die maximale Geschwindigkeit überschreiten kann, abzufragen, ob sich der Fahrhebel (58) in einer Stellung befindet, die einer Vortriebsgeschwindigkeit entspricht, die größer als die maximale Geschwindigkeit des Arbeitsfahrzeugs (10) ist und wenn die die gewählte Geschwindigkeit größer als die maximale Geschwindigkeit ist, die Geschwindigkeitseinstelleinrichtung (26) in eine Stellung zu verbringen, die der maximal zulässigen Geschwindigkeit entspricht.

2. Antriebssystem nach Anspruch 1, **dadurch gekennzeichnet, dass** die obere Grenze des Verstellbereichs der Geschwindigkeitseinstelleinrichtung (26, 122) bei einer Übersetzungsstufe des Wechselgetriebes (18), die die höchste Übersetzungsstufe oder eine der höheren Übersetzungsstufen ist, niedriger ist als bei den anderen Übersetzungsstufen.

3. Antriebssystem nach einem der Ansprüche 1 bis 2, **dadurch gekennzeichnet, dass** die Geschwindigkeitseinstelleinrichtung (26, 122) mit einem Taumelscheibenverstellhebel (62) verbunden ist, der zur Verstellung einer Taumelscheibe der Hydrostatpumpe (14) und/oder einer Taumelscheibe des Hydraulikmotors (16) eingerichtet ist.

4. Arbeitsfahrzeug, insbesondere landwirtschaftliches Fahrzeug mit einem Antriebssystem nach einem der vorhergehenden Ansprüche.

## Claims

1. Drive system of a utility vehicle (10), having a motor (12) which is in drive connection to a hydrostatic pump (14) which is connected in a hydraulic fluid conducting manner to a hydraulic motor (16) which is in drive connection to drive means, situated in ground engagement, via a gear change box (18) which has various selectable transmission steps, a speed adjustment device (26, 122), which cooperates with the hydrostatic pump (14) and/or the hydraulic motor (16) in order to adjust the number of revolutions of the hydraulic motor (16), being present, said speed adjustment device being moveable over an adjustment range which has an upper limit, for definition of a maximum speed, which is a function of the transmission step of the gear change box (18), **characterised in that** the speed adjustment device (26) is provided with a drive which is controlled by an electronic control unit (22), **in that** the control unit (22) cooperates with a sensor (24) which detects the respectively selected transmission step of the gear change box (18), the electronic control unit (22) being connected to a drive lever sensor (56) which cooperates with a drive lever (58) which serves for speed adjustment and is disposed in the driver's cabin pivotably about a horizontal axis (57) which extends transversely relative to the forward movement direction, the drive lever sensor (56) detecting the respective angle of the drive lever (58) and supplying the control unit (22) with an electric signal which contains information relating to the respective position of the drive lever (58), and the control unit (22) being able to be operated to query, in the case of a signal of the sensor (24) which indicates an engaged transmission step of the gear change box (18) in which the speed of the utility vehicle (10) can exceed the maximum speed, whether the drive lever (58) is situated in a position which corresponds to a propulsion speed which is greater than the maximum speed of the utility vehicle (10) and, when the selected speed is greater than the maximum speed, to bring the speed adjustment device (26) into a position which corresponds to the maximum permissible speed.

2. Drive system according to claim 1, **characterised in that** the upper limit of the adjustment range of the speed adjustment device (26, 122), in the case of a transmission step of the gear change box (18) which is the highest transmission step or one of the higher transmission steps, is lower than in the case of the other transmission steps.

3. Drive system according to one of the claims 1 to 2, **characterised in that** the speed adjustment device (26, 122) is connected to a swash plate adjustment lever (62) which is equipped for adjustment of a swash plate of the hydrostatic pump (14) and/or a swash plate of the hydraulic motor (16).

4. Utility vehicle, in particular an agricultural vehicle, having a drive system according to one of the preceding claims.

## Revendications

1. Système d'entraînement pour véhicule de travail (10), avec un moteur (12), qui est en liaison d'entraînement avec une pompe hydrostatique (14), qui est en liaison de communication de liquide hydraulique avec un moteur hydraulique (16) qui est en liaison d'entraînement, par l'intermédiaire d'une boîte de vitesses (18) qui présente différents rapports de transmission sélectionnables, avec des moyens d'entraînement se trouvant en prise avec le sol, dans lequel il est prévu un dispositif de réglage de vitesse (26, 122) coopérant avec la pompe hydrostatique (14) et/ou avec le moteur hydraulique (16) pour régler la vitesse de rotation du moteur hydraulique (16), et qui est réglable sur une plage de réglage qui présente, pour définir une vitesse maximale, une limite supérieure qui dépend du rapport de transmission de la boîte de vitesses (18), **caractérisé en ce que** le dispositif de réglage de vitesse (26) est pourvu d'un entraînement commandé par une commande électronique (22), **en ce que** la commande électronique (22) coopère avec un détecteur (24) détectant le rapport de transmission respectivement choisi de la boîte de vitesses (18), dans lequel la commande électronique (22) est raccordée à un détecteur de levier d'accélérateur (56) qui coopère avec un levier d'accélérateur (58) disposé dans la cabine du conducteur, pouvant pivoter autour d'un axe horizontal (57) orienté transversalement à la direction du mouvement d'avancement et servant pour le réglage de la vitesse, dans lequel le détecteur de levier d'accélérateur (56) détecte l'angle actuel du levier d'accélérateur (58) et envoie à la commande (22) un signal électrique qui contient une information concernant la position actuelle du levier d'accélérateur (58), et la commande (22) peut être utilisée, pour un signal du détecteur (24) qui indique un rapport de transmission engagé de la boîte de vitesses (18) pour lequel la vitesse du véhicule de travail (10) peut dépasser la vitesse maximale, pour demander si le levier d'accélérateur (58) se trouve dans une position qui correspond à une vitesse d'avancement qui est plus grande que la vitesse maximale du véhicule de travail (10) et, si la vitesse choisie est plus grande que la vitesse maximale, pour amener le dispositif de réglage de vitesse (26) dans une position qui correspond à la vitesse maximale admissible.

2. Système d'entraînement selon la revendication 1, **caractérisé en ce que** la limite supérieure de la plage de réglage du dispositif de réglage de vitesse (26, 122) pour un rapport de transmission de la boîte de vitesses (18) qui est le rapport de transmission le plus élevé ou un des rapports de transmission les plus élevés, est plus basse que pour les autres rapports de transmission.

3. Système d'entraînement selon l'une quelconque des revendications 1 à 2, **caractérisé en ce que** le dispositif de réglage de vitesse (26, 122) est raccordé à un levier de réglage de plateau oscillant (62), qui est conçu pour le réglage d'un plateau oscillant de la pompe hydrostatique (14) et/ou d'un plateau oscillant du moteur hydraulique (16).

4. Véhicule de travail, en particulier véhicule agricole, avec un système d'entraînement selon l'une quelconque des revendications précédentes.
